# EUROPEAN PATENT SPECIFICATION

(11) **EP 3 838 568 B1**
(45) Date of publication and mention of the grant of the patent: **30.11.2022**
(21) Application number: 19383123.7
(22) Date of filing: 17.12.2019
(51) Int. Cl.: B29C 70/44, B29C 43/36, B29D 99/00, B29C 70/54, B29L 31/30, B29C 43/10, B29C 43/12, B29C 43/20, B29C 43/56

(54) **METHOD FOR MANUFACTURING FIBRE COMPOSITE COMPONENTS**
VERFAHREN ZUR HERSTELLUNG VON FASERVERBUNDKOMPONENTEN
PROCÉDÉ DE FABRICATION DE COMPOSANTS COMPOSITES

(43) Date of publication of application: 23.06.2021
(73) Proprietor: Airbus Defence and Space SAU, 28906 Getafe (ES)
(72) Inventor: TABARES FERNÁNDEZ, Patricia, 28906 Getafe (ES); CUENCA RINCÓN, José, 28906 Getafe (ES)
(74) Representative: Elzaburu S.L.P.

(56) References cited:
- EP-A1- 2 648 893
- DE-B3-102008 057 783
- US-A1- 2017 072 647

## Description

### Field of the invention

The invention relates to a method for manufacturing structures of composite materials such as stiffened panels made of dry fibre composite preforms by means of an infusion method (VAP) (registered trade mark) with curing tools arranged outside the vacuum bag.

### Background of the invention

Aeronautical composite structures are currently manufactured by autoclave consolidation. Specifically, today's manufacturing methods for composites stiffened panels are based on autoclave consolidation with curing tools inside the vacuum bag. Recently, processes with the curing tools outside the vacuum bag have been developed trying to reduce tooling problems.

On the other hand, several manufacturing processes use VAP (registered trade mark) process to avoid the autoclave consolidation, but at these processes the curing tools are positioned inside the vacuum bag and inside the semi-permeable membrane.

It is known document EP2648893 disclosing a composite structure comprising a main body and a flange. The composite structure is manufactured by laying-up a preform on a mould. The preform does not have the first and second bends and comprises a first part which corresponds to the main body of the composite structure and a second part which corresponds to the flange of the composite structure. The second part of the preform has a proximal portion which corresponds to the wall portion of the flange and a distal portion which corresponds to the lip portion of the flange. The preform comprises a plurality of plies and uni-directional ply material extends from the first part of the preform to the distal portion of the second part of the preform. The flange is formed by advancing movable portions of the mould to form the proximal portion of the second part of the preform to create the first bend and by forming the distal portion of the second part of the preform around the advancing movable portions of the mould to create the second bend. The presence of the two bends ensures that the ply material is kept in tension during the forming operation.

### Summary of the invention

The present invention relates to a process for manufacturing components or structures of composite materials, such as stiffened panels, made of dry fibre composite preforms by means of an infusion method, specifically by a vacuum assisted process (VAP) (registered trade mark), with curing tools arranged outside the vacuum bag.

The method object of the invention comprises the following steps:
- providing a dry fibre composite preform of the component, for instance, onto a base element,
- in a first step providing a semi-permeable membrane which is gas-permeable and matrix-material-impermeable arranged at least around one side of the fibre composite preform. Matrix is feedable around the preform and inside the semi-permeable membrane. For instance, it is feedable into the space between the base element and the semi-permeable membrane, i.e, inside the semi-permeable membrane,
- providing curing tools onto the semi-permeable membrane, the curing tools being adjusted to the preform and such that the semi-permeable membrane is located between the curing tools and the preform,
- afterwards creating vacuum inside the semi-permeable membrane,
- removing the curing tools from the semi-permeable membrane,
- in a second step providing a vacuum bag which is impermeable to gaseous material and matrix material arranged around the semi-permeable membrane,
- providing the curing tools onto the vacuum bag. The curing tools are adjusted to the preform. The vacuum bag and the semi-permeable membrane are located between the curing tools and the preform,
- afterwards generating vacuum inside the semi-permeable membrane and the vacuum bag
- communicating the inside of the semi-permeable membrane with a matrix material reservoir, the material being infused into the preform,
- curing the preform,
- demoulding the cured preform from the curing tools.

The claimed method allows consolidating the component out of autoclave through an infusion method that solves problems related to the quality of parts that have a complex geometry, for instance, stiffeners. The claimed method achieves a reduction in the porosity level of the cured component. As the semi-permeable membrane is located below the curing tools, the aeration surface is increased. It reduces porosity defects that appear in these processes when preforms of materials with low permeability are used.

On the other hand, this invention also solves other problems like differential thickness thorough the section of the component, for instance, along the section of the stiffener, and lack of uniformity at the interface line of the different elements of a complex component, for instance, the interface line between the skin and the stiffener. When the curing tools are placed below the semi-permeable membrane, said semi-permeable membrane has to adapt to greater thickness jumps due to the height of the tools. It generates more heterogeneity in the distribution of resin and there are more resin accumulations. When the curing tools are located outside, the membrane adjusts much better to the preform, obtaining better thickness tolerances and reducing the areas of resin accumulation.

Vacuum is performed firstly inside the semi-permeable membrane in order to adjust the membrane to the preform, thus avoiding the formation of wrinkles in the preform, which otherwise could be marked on the piece. When vacuum is performed, the curing tools help the preform not to be bent or damaged.

The solution according to the present invention applies to the production of composite reinforced plastic components containing carbon fibers, glass fibers, aramide fibers, boron fibers or hybrid materials.

The component obtained by this method could be a stiffened panel, a skin with frames or any other reinforcement element with any other section.

The claimed process is able to obtain the advantages of the techniques using VAP (registered trade mark) processes but solving problems related with the quality of, for instance, a stiffener part or any other difficult geometry part because of the porosity level when materials with low permeability level are used at the infusion process.

### Description of the figures

To complete the description and in order to provide for a better understanding of the invention, a drawing is provided. Said drawing form an integral part of the description and illustrate a preferred embodiment of the invention. The drawing comprises the following figure.

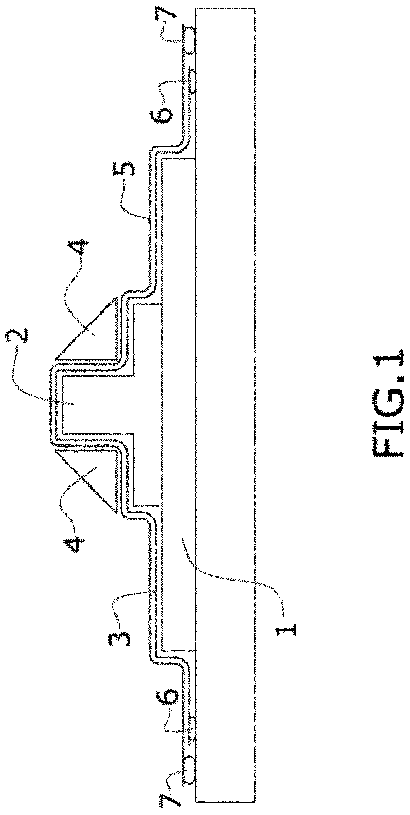

Figure 1 shows a schematic cross-sectional view of an embodiment according to the method of the invention.

### Detailed description of the invention

Figure 1 discloses a preform (1, 2) comprising a skin (1) and a stiffener (2) comprising a T-shaped cross section. Other shapes are possible, for instance, a L, J or omega shape.

In an embodiment, the preform (1, 2) is previously laminated by automatic fibre deposition from a dry fibre material. The stiffeners (2) laminates are formed to obtain de T-section stiffeners preform. Thus, the skin (1) and the stiffener (2) are firstly laminated and afterwards the stiffener (2) and the skin (1) are integrated.

The skin (1) is located onto a base element that can be flat or curved depending on the part to be manufactured. Two curing tools (4) are arranged over the stiffener (2) to help to consolidate the part during the curing process. The curing tools (4) may be made from various suitable materials, e.g., wood, steel, sheet metal, glass, etc.

As previously stated, the semi-permeable membrane (3) is a gas-permeable and matrix-material-impermeable membrane. Thus, the semi-permeable membrane (3) is gas-permeable but prevents penetration of matrix material.

The semi-permeable membrane (3) is arranged one side around the fibre composite skin (1) and stiffener (2) preforms, so the preform (1, 2) is covered by the semi-permeable membrane (3). The membrane (3) may be sealed against the base element, for instance, close to the preform (1, 2) by a seal (6), which seals the space formed by the semi-permeable membrane (3) and the preform (1, 2). In the shown figure, the seal is performed between the semi-permeable membrane (3) and the base element. As an alternative, the semi-permeable membrane (3) may also surround the entire preform (1, 2) by, for instance, designing the membrane (3) in a single piece.

In the shown embodiment, the resin matrix is feedable into the space between the base element and the semi-permeable membrane (3). In a preferred embodiment, it is fed in the space between the preform (1, 2) and the base element. Alternatively, it can be fed in the space between the preform (1, 2) and the semi-permeable membrane (3).

The curing tools (4) are located in figure 1 onto the semi-permeable membrane (3) and onto the vacuum bag (5) and are adjusted to the preform (1, 2), specifically to the web and flanges of the stiffener (2).

In a first step the semi-permeable membrane (3) is provided and the curing tools (4) are provided onto said semi-permeable membrane (3). Afterwards, vacuum inside this membrane (3) is created and the curing tools (4) are removed from the semi-permeable membrane (3).

In a second step the vacuum bag (5) is provided around the semi-permeable membrane (3) and the curing tools (4) are provided onto the vacuum bag (5), the curing tools (4) being adjusted to the preform (1, 2). Afterwards, vacuum is generated inside the semi-permeable membrane (3) and the vacuum bag (5) by a seal (7).

The inside of the semi-permeable membrane (3) is communicated with a matrix material reservoir. In the shown embodiment. the space between the base element and the semi-permeable membrane (3) is communicated with the matrix material reservoir and due to the gradient of pressure, the resin is infused into the preform (1, 2).

As soon as complete impregnation has occurred, curing is performed at a suitable temperature while the vacuum is maintained at the same level.

In an embodiment, after generating vacuum inside the semi-permeable membrane (3) and the vacuum bag (5), temperature is applied to the preform (1, 2) to reach the infusion temperature of the matrix material and once the matrix material is infused into the preform (1, 2), the temperature of the preform (1, 2) is increased until the curing temperature of the matrix material.

The preform (1, 2) and the reservoir for the matrix material may be located on hot plates, within a heated chamber, within a heatable liquid (oil bath, etc.) or, preferably, within an oven, if the selected resin system requires thermal treatment during infusion.

After the thermal cycle, the cured preformed is demolded from the curing tools (4) and from the ancillary materials to obtain the final component.

## Claims

1. Method for manufacturing fibre composite components, by an infusion method for infusing matrix material, wherein the method for manufacturing comprises the following steps:
- providing a dry fibre composite preform (1, 2) of the component,
- in a first step providing a semi-permeable membrane (3) which is gas-permeable and matrix-material-impermeable arranged at least around one side of the fibre composite preform (1, 2), matrix being feedable around the preform (1, 2) and inside the semi-permeable membrane (3), and
- providing curing tools (4) onto the semi-permeable membrane (3) such that the semi-permeable membrane (3) is located between the curing tools (4) and the preform (1, 2), the curing tools (4) being adjusted to the preform (1, 2),
- afterwards creating vacuum inside the semi-permeable membrane (3), and
- removing the curing tools (4) from the semi-permeable membrane (3),
- in a second step providing a vacuum bag (5) which is impermeable to gaseous material and matrix material arranged around the semi-permeable membrane (3), and
- providing the curing tools (4) onto the vacuum bag (5), such that the vacuum bag (5) and the semi-permeable membrane (3) are located between the curing tools (4) and the preform (1, 2), the curing tools (4) being adjusted to the preform (1, 2),
- afterwards generating vacuum inside the semi-permeable membrane (3) and the vacuum bag (5),
- communicating the inside of the semi-permeable membrane (3) with a matrix material reservoir which is infused into the preform (1, 2),
- curing the preform (1, 2),
- demoulding the cured preform (1, 2) from the curing tools (4).

2. Method for manufacturing fibre composite components, according to claim 1, wherein after generating vacuum inside the semi-permeable membrane (3) and the vacuum bag (5), temperature is applied to the preform (1, 2) to reach the infusion temperature of the matrix material and once the matrix material is infused into the preform (1, 2), the temperature of the preform (1, 2) is increased until the curing temperature of the matrix material.

3. Method for manufacturing fibre composite components, according to claim 2, wherein after communicating the inside of the semi-permeable membrane (3) with a matrix material reservoir, the preform (1, 2), the semi-permeable membrane (3), the vacuum bag (5) and the curing tools (4) are introduced into an oven.

4. Method for manufacturing fibre composite components, according to any preceding claim, wherein the preform (1, 2) is laminated by automatic fibre deposition from a dry fibre material before being provided.

5. Method for manufacturing fibre composite components, according to any preceding claim, wherein the preform (1, 2) comprises a skin (2) and a stiffener (2).

6. Method for manufacturing fibre composite components, according to claim 5, wherein the stiffener (2) comprises a T-shaped cross section.

7. Method for manufacturing fibre composite components, according to claim 6, wherein the curing tools (4) are positioned onto the semi-permeable membrane (3) and onto the vacuum bag (5) to be adjusted to the T-shaped cross section of the stiffener (2).

## Patentansprüche

1. Verfahren zur Herstellung von Bauteilen aus Faserverbundwerkstoff durch ein Infusionsverfahren zum Infundieren von Matrixmaterial, wobei das Verfahren zur Herstellung die folgenden Schritte umfasst:
- Bereitstellen eines Vorformlings eines Dry-Fiber-Verbundwerksstoffes (1, 2) des Bauteils,
- in einem ersten Schritt Bereitstellen einer halbdurchlässigen Membran (3), die gasdurchlässig und matrixmaterialundurchlässig ist und mindestens um eine Seite des Vorformlings des Faserverbundwerkstoffes (1, 2) angeordnet ist, wobei das Matrixmaterial um den Vorformling (1, 2) und innerhalb der halbdurchlässigen Membran (3) zuführbar ist, und
- Bereitstellen von Härtungswerkzeugen (4) für die halbdurchlässige Membran (3), so dass sich die halbdurchlässige Membran (3) zwischen den Härtungswerkzeugen (4) und dem Vorformling (1, 2) befindet, wobei die Härtungswerkzeuge (4) auf den Vorformling (1, 2) eingestellt sind,
- danach Erzeugen eines Vakuums innerhalb der halbdurchlässigen Membran (3), und
- Entfernen der Härtungswerkzeuge (4) von der halbdurchlässigen Membran (3),
- in einem zweiten Schritt Bereitstellen eines Vakuumbeutels (5), der für gasförmiges Material und Matrixmaterial, das um die halbdurchlässige Membran (3) angeordnet ist, undurchlässig ist, und
- Bereitstellen der Härtungswerkzeuge (4) für den Vakuumbeutel (5), so dass sich der Vakuumbeutel (5) und die halbdurchlässige Membran (3) zwischen den Härtungswerkzeugen (4) und dem Vorformling (1, 2) befinden, wobei die Härtungswerkzeuge (4) auf den Vorformling (1, 2) eingestellt sind,
- danach Erzeugen eines Vakuums innerhalb der halbdurchlässigen Membran (3) und des Vakuumbeutels (5),
- Verbinden der Innenseite der halbdurchlässigen Membran (3) mit einem Behälter für das Matrixmaterial, das in den Vorformling (1, 2) infundiert wird,
- Aushärten des Vorformlings (1,2),
- Entformen des ausgehärteten Vorformlings (1,2) aus den Härtungswerkzeugen (4).

2. Verfahren zum Herstellen von Bauteilen aus Faserverbundwerkstoff nach Anspruch 1, wobei nach dem Erzeugen eines Vakuums in der halbdurchlässigen Membran (3) und im Vakuumbeutel (5) eine Temperatur an den Vorformling (1, 2) angelegt wird, um die Infusionstemperatur des Matrixmaterials zu erreichen, und nachdem das Matrixmaterial in den Vorformling (1, 2) infundiert ist, die Temperatur des Vorformlings (1, 2) erhöht wird, bis die Härtungstemperatur des Matrixmaterials erreicht ist.

3. Verfahren zum Herstellen von Bauteilen aus Faserverbundwerkstoff nach Anspruch 2, wobei nach dem Verbinden des Inneren der halbdurchlässigen Membran (3) mit einem Behälter für das Matrixmaterial, der Vorformling (1, 2), die halbdurchlässige Membran (3), der Vakuumbeutel (5) und die Härtungswerkzeuge (4) in einen Ofen eingeführt werden.

4. Verfahren zur Herstellung von Bauteilen aus Faserverbundwerkstoff nach einem der vorhergehenden Ansprüche, wobei der Vorformling (1, 2) durch automatische Faserabscheidung aus einem Dry-Fiber-Material laminiert wird, bevor er bereitgestellt wird.

5. Verfahren zur Herstellung von Bauteilen aus Faserverbundwerkstoff nach einem der vorhergehenden Ansprüche, wobei der Vorformling (1, 2) eine Haut (2) und eine Versteifung (2) umfasst.

6. Verfahren zur Herstellung von Bauteilen aus Faserverbundwerkstoff nach Anspruch 5, wobei die Versteifung (2) einen T-förmigen Querschnitt aufweist.

7. Verfahren zur Herstellung von Bauteilen aus Faserverbundwerkstoff nach Anspruch 6, wobei die Härtungswerkzeuge (4) auf der halbdurchlässigen Membran (3) und auf dem Vakuumbeutel (5) positioniert werden, um auf den T-förmigen Querschnitt des Versteifers (2) eingestellt zu werden.

## Revendications

1. Méthode de fabrication de composants composites fibreux, par une méthode d'infusion pour l'infusion d'un matériau de matrice, dans lequel la méthode de fabrication comprend les étapes suivantes :
- fournir une préforme (1, 2) en composite de fibres sèches du composant,
- dans une première étape, fournir une membrane semi-perméable (3) qui est perméable aux gaz et imperméable au matériau de matrice disposée au moins autour d'un côté de la préforme composite de fibres (1, 2), la matrice pouvant être alimentée autour de la préforme (1, 2) et à l'intérieur de la membrane semi-perméable (3), et
- fournir des outils de durcissement (4) sur la membrane semi-perméable (3) de telle sorte que la membrane semi-perméable (3) soit située entre les outils de durcissement (4) et la préforme (1, 2), les outils de durcissement (4) étant ajustés à la préforme (1, 2),
- créer ensuite un vide à l'intérieur de la membrane semi-perméable (3), et
- retirer les outils de durcissement (4) de la membrane semi-perméable (3),
- dans une seconde étape, fournir un sac à vide (5) qui est imperméable au matériau gazeux et au matériau matriciel disposés autour de la membrane semi-perméable (3), et
- disposer les outils de durcissement (4) sur le sac sous vide (5), de sorte que le sac sous vide (5) et la membrane semi-perméable (3) soient situés entre les outils de durcissement (4) et la préforme (1, 2), les outils de durcissement (4) étant ajustés à la préforme (1, 2),
- générer ensuite un vide à l'intérieur de la membrane semi-perméable (3) et du sac à vide (5),
- la mise en communication de l'intérieur de la membrane semi-perméable (3) avec un réservoir de matériau de matrice qui est injecté dans la préforme (1, 2),
- durcissement de la préforme (1,2),
- démoulage de la préforme durcie (1, 2) à partir des outils de durcissement (4).

2. Méthode de fabrication de composants composites fibreux selon la revendication 1, dans lequel, après la génération d'un vide à l'intérieur de la membrane semi-perméable (3) et de la poche à vide (5), la température est appliquée à la préforme (1, 2) pour atteindre la température de perfusion du matériau de matrice et, une fois que le matériau de matrice est perfusé dans la préforme (1, 2), la température de la préforme (1, 2) est augmentée jusqu'à la température de durcissement du matériau de matrice.

3. Méthode de fabrication de composants composites fibreux selon la revendication 2, dans lequel, après avoir mis en communication l'intérieur de la membrane semi-perméable (3) avec un réservoir de matériau de matrice, la préforme (1, 2), la membrane semi-perméable (3), le sac à vide (5) et les outils de durcissement (4) sont introduits dans un four.

4. Méthode de fabrication de composants composites fibreux selon l'une des revendications précédentes, dans lequel la préforme (1, 2) est stratifiée par dépôt automatique de fibres à partir d'un matériau fibreux sec avant d'être fournie.

5. Méthode de fabrication de composants composites fibreux selon l'une des revendications précédentes, dans lequel la préforme (1, 2) comprend une peau (2) et un raidisseur (2).

6. Méthode de fabrication de composants composites fibreux selon la revendication 5, dans lequel le raidisseur (2) comprend une section transversale en forme de T.

7. Méthode de fabrication de composants composites fibreux selon la revendication 6, dans lequel les outils de durcissement (4) sont positionnés sur la membrane semi-perméable (3) et sur le sac à vide (5) à ajuster à la section transversale en forme de T du raidisseur (2).
